# FASCICULE DE BREVET EUROPEEN

(11) **EP 2 169 886 B1**
(45) Date de publication et mention de la délivrance du brevet: **29.04.2015**
(21) Numéro de dépôt: 09170057.5
(22) Date de dépôt: 11.09.2009
(51) Int. Cl.: H04L 12/58

(54) **Procédé et serveur pour commander au moins une fonction d'un client de messagerie instantanée**
Verfahren und Server zur Aktivierung einer Funktion in einem Client eines sofortigen Nachrichtendienstes
Method and server for activating a function on an instant messaging client

(30) Priorité: 25.09.2008 FR 0856437
(43) Date de publication de la demande: 31.03.2010
(73) Titulaire: ALCATEL LUCENT, 92100 Boulogne-Billancourt (FR)
(72) Inventeur: Germaneau, Alexis, 91620, NOZAY (FR); Marilly, Emmanuel, 91620, NOZAY (FR)
(74) Mandataire: Sciaux, Edmond

(56) Documents cités:
- EP-A1- 1 624 613
- US-A1- 2005 223 073
- US-A1- 2006 274 728
- US-A1- 2007 208 850

## Description

L'invention concerne un procédé pour commander au moins une fonction d'un client de messagerie instantanée. Ce client est exécuté dans un terminal, et il est connecté à un serveur exécutant un logiciel serveur de messagerie instantanée.

Une messagerie instantanée permet une conversation en ligne (« chat » en anglais), c'est à dire un échange instantané de messages textuels entre plusieurs ordinateurs connectés au même réseau informatique, et plus communément celui de l'Internet. Contrairement au courrier électronique, ce moyen de communication est caractérisé par le fait que les messages s'affichent en quasi-temps-réel et permettent un dialogue interactif. Des groupes de discussion ou conférences (« Multi User Chat » en anglais) permettent de créer des conversations à plus de deux utilisateurs. IL est possible de créer des groupes publics ou privés.

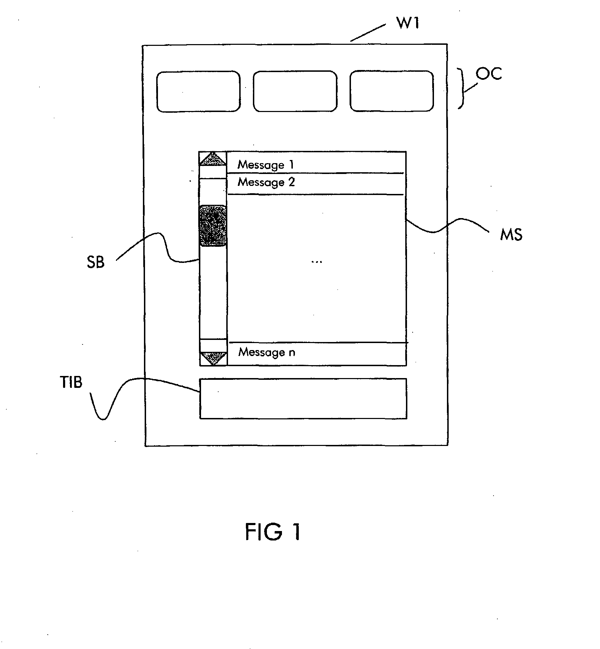

La **figure 1** représente la fenêtre principale W1 affichée par un exemple de client classique de messagerie instantanée, tel que Windows Live Messenger, Google Talk, IRC, ICQ. Cette fenêtre W1 comporte :
- Une zone MS affichant une suite de messages reçus, Message 1, Message 2, Message 3, ..., Message n, où chaque message comporte un nom d'expéditeur et quelques lignes de texte.
- Un ascenseur SB situé en bordure de la zone MS, et qui est déplaçable avec un dispositif de pointage tel qu'un stylet, un doigt, une souris, etc. Il permet de faire monter ou descendre la suite de messages afin de pouvoir lire tous les messages même quand la suite de messages est plus longue que la hauteur de la fenêtre W1.
- Une zone TIB permet de saisir du texte qui constituera le prochain message envoyé par l'utilisateur de ce client de messagerie, à destination de tous les participants présents sur le même canal de conversation que cet utilisateur.
- Une barre d'outils OC comportant une pluralité de boutons, icônes, ou menus déroulants, actionnables avec un dispositif de pointage, pour commander des fonctions classiques du client de messagerie instantanée, telles que Envoyer, Répondre, Insérer une Binette (« smiley » en anglais), etc.
   Les messageries instantanées sont utilisées non seulement sur les ordinateurs mais aussi sur des téléphones portables. Sur un téléphone portable, le nombre des commandes dans la barre d'outils OC doit être limité à cause de l'exigüité de l'écran (Faible surface et faible résolution de l'écran). Lorsqu'on souhaite ajouter une commande pour une fonction supplémentaire, il n'y a plus de place disponible. Cependant il est souhaitable d'augmenter le nombre de fonctions car les usagers sont friands de fonctions améliorant le confort d'utilisation des messageries instantanées.

Le document US 2005/223073 décrit un procédé permettant de rajouter une fonction différente pour chaque message, parce qu'un module logiciel différent peut être fourni par un serveur spécifiquement pour chaque message. Le fait d'associer une fonction à un message, et pas à l'ensemble des messages, permet de rajouter de nombreuses fonctions, chaque fonction rajoutée étant spécifique d'un seul type de message, sans avoir à agrandir la barre d'outils, ni alourdir les menus déroulants. Les boutons et menus affichés en permanence dans la barre d'outils peuvent alors être restreints à quelques fonctions de base, communes à tous les messages. Leur nombre est donc réduit.

Le document EP 1 624 613 décrit une messagerie instantanée comportant un composant configuré pour générer une communication structurée. Ce composant permet à un utilisateur de formuler une communication structurée pour un envoi à un ou plusieurs destinataires. Les destinataires sont représentés par la communication structurée de telle façon qu'ils fournissent une réponse structurée qui est transmis à l'expéditeur du message. Les réponses des différents destinataires peuvent ensuite être examinées dans un format souhaité par l'expéditeur.

Le document US 2006/274728 décrit un procédé pour envoyer un message en mode radiomessagerie (« pager » en anglais), dans un système prévu pour envoyer des messages en mode session. Le procédé comprend l'envoi d'un message à l'aide d'une messagerie en mode session avec une indication indiquant que le message est en réalité en mode radiomessagerie. A la réception du message, il est traité comme un message en mode radiomessagerie.

Le but de l'invention est d'améliorer encore les fonctions offertes par une messagerie instantanée.

L'objet de l'invention est un procédé pour commander au moins une fonction d'un client de messagerie instantanée, comportant les étapes consistant à :
- envoyer, d'un serveur vers ce client, un message contenant un indicateur de type de message,
- recevoir ce message dans le client et afficher ce message sur un écran,
- extraire du message reçu un indicateur de type de message,
- associer à ce message un second module logiciel correspondant au type du message,
- et exécuter ce second module logiciel dans le serveur.

Le procédé ainsi caractérisé permet de proposer des fonctions plus complexes qui nécessitent une coopération du serveur et d'au moins un client. En effet, il permet de réaliser automatiquement des actions dans le serveur en plus des actions commandées par l'utilisateur, dans le client. Ces actions sont coordonnées parce que, des deux côtés, elles correspondent au même indicateur de type de message, extrait du même message considéré dans le serveur puis dans le client. Par exemple, le serveur se prépare à recevoir et à compiler des votes, lorsqu'il voit passer un message du type « Vote », qui a pour effet que le client propose à un utilisateur de voter sur tel ou tel sujet.

L'invention a aussi pour objet un serveur de messagerie instantanée, comportant des moyens pour envoyer, vers un client, un message contenant un indicateur de type de message, cet indicateur étant susceptible d'indiquer qu'une fonction est associée à ce message ;
**caractérisé en ce qu'**il comporte en outre :
- des moyens pour stocker des modules logiciels exécutables mettant en oeuvre des fonctions qui peuvent être associées à des messages envoyés par ce serveur ;
- des moyens pour extraire, d'un message à envoyer, un indicateur de type de message,
- et des moyens pour exécuter, dans ce serveur, un module logiciel correspondant au type du message à envoyer, si une fonction est associée à ce message.

L'invention sera mieux comprise et d'autres caractéristiques apparaîtront à l'aide de la description ci-dessous et des figures l'accompagnant :
- La figure 1, décrite précédemment, représente la fenêtre principale d'un exemple de client classique de messagerie instantanée.

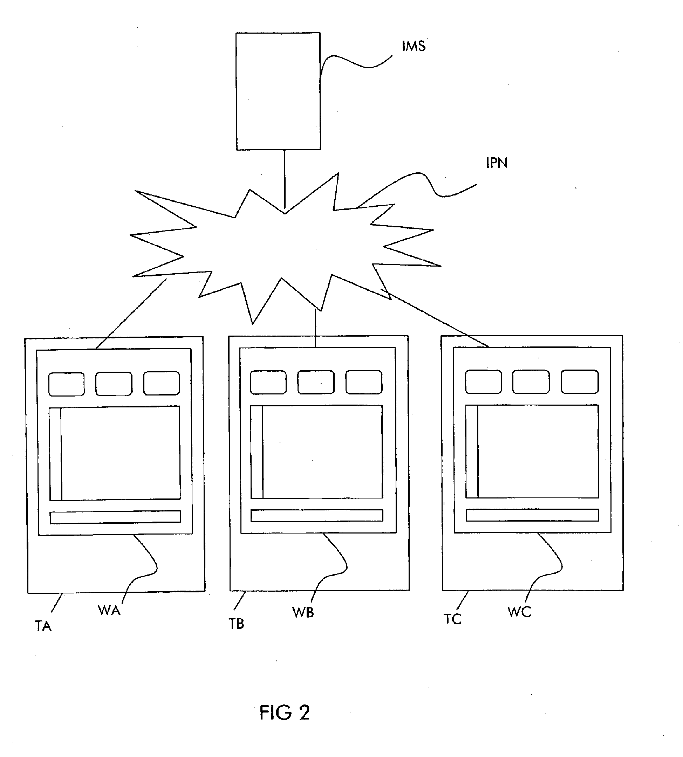

- La figure 2 représente un groupe de terminaux exécutant des clients de messagerie instantanée respectivement pour trois utilisateurs inscrits dans un même groupe de conversation en ligne.
- La figure 3 représente schématiquement les modules logiciels utilisés dans un exemple de réalisation du terminal selon l'invention et ceux utilisés dans un exemple de réalisation du serveur de messagerie instantanée selon l'invention.
- La figure 4 illustre un exemple de mise en oeuvre du procédé selon l'invention pour un message associé à une fonction de vote.
- La figure 5 représente les échanges de message entre trois clients, selon l'invention, et un serveur de messagerie instantanée pendant les votes de deux utilisateurs pour décider si un troisième utilisateur est autorisé à faire partie du groupe déjà constitué des deux premiers utilisateurs.
- La figure 6 représente plus en détails les étapes du traitement d'un message reçu par un serveur de messagerie instantanée, dans un exemple de mise en oeuvre du procédé selon l'invention.
- La figure 7 représente plus en détails les étapes du traitement d'un message reçu par un client de messagerie instantanée, dans un exemple de mise en oeuvre du procédé selon l'invention.
- La figure 8 représente plus en détails les étapes du traitement d'une action de l'utilisateur sur un message affiché par un client de messagerie instantanée, dans un exemple de mise en oeuvre du procédé selon l'invention.
- La figure 9 représente plus en détails une étape du traitement d'un message reçu par un client de messagerie instantanée, dans l'exemple de mise en oeuvre du procédé selon l'invention, illustré par la figure 7.
- La figure 10 représente un exemple d'échanges de message entre un client et un serveur de messagerie instantanée, pour télécharger un module logiciel correspondant à une fonction associée à un type de message.
- La figure 11 représente les échanges de messages entre des clients et un serveur de messagerie instantanée, pendant l'utilisation d'un autre exemple de fonction associée à un message, permettant de participer à un jeu.

La représente un groupe de terminaux TA, TB, TC exécutant respectivement trois clients de messagerie instantanée respectivement pour trois utilisateurs inscrits dans un même groupe de conversation en ligne. Ces clients affichent respectivement, sur les terminaux TA, TB, TC, des fenêtres WA, WB, WC, analogues à la fenêtre W1 représentée sur la figure 1. Ces terminaux sont connectés à un même canal de conversation sur un serveur de messagerie instantanée IMSV, par un réseau IPN de transport de données. Ce réseau peut être l'Internet public ou un réseau privé.

Par exemple, quand le client A envoie un message sur ce canal de conversation, il envoie ce message au serveur IMSV. Selon un premier mode de réalisation classique, le serveur IMSV le réémet vers les autres clients B et C qui sont connectés au même canal. Selon un autre mode de réalisation classique, tous les clients A, B, C interrogent périodiquement le serveur IMSV et celui-ci réémet le message à chaque client lorsqu'il l'interroge, si ce client est connecté au canal concerné par le message.

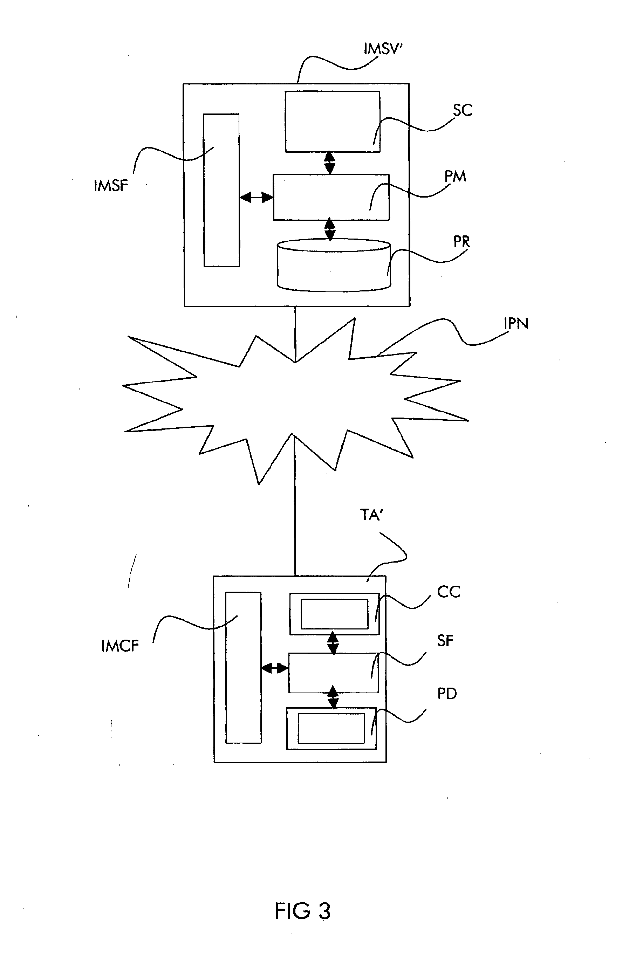

La **figure 3** représente schématiquement les modules logiciels utilisés dans un exemple de réalisation TA' du terminal selon l'invention et ceux utilisés dans un exemple de réalisation IMSV' du serveur de messagerie instantanée selon l'invention. Le serveur IMSV' comporte les modules logiciels suivants :
- Des fonctions classiques de serveur de messagerie instantanée, IMSF.
- Une console d'opérateur SC permettant à un opérateur de définir des règles et des fonctions.
- Un gestionnaire de règles PM pour extraire, d'un message à envoyer, un indicateur de type de message, et pour exécuter dans le serveur IMSV' un module logiciel correspondant au type du message à envoyer, si une fonction est associée à ce message.
- Un dépôt de règles PR, pour stocker des règles et des modules logiciels exécutables. Il stocke des premiers modules logiciels mettant en oeuvre, dans les terminaux, des fonctions qui peuvent être associées à des messages envoyés par le serveur. Il stocke des seconds modules logiciels mettant en oeuvre, dans le serveur IMSV', des fonctions qui peuvent être associées à des messages envoyés par le serveur. Il comporte en outre des moyens logiciels pour télécharger les premiers modules logiciels vers des terminaux, ou selon un autre mode de réalisation, pour insérer de tels modules logiciels exécutables respectivement dans des messages à envoyer aux terminaux.

Le terminal TA', pris à titre d'exemple, comporte les modules logiciels suivants, qui constituent un client de messagerie instantanée selon l'invention et qui collaborent avec ceux du serveur IMSV', pour assurer le service de messagerie instantanée :
- Un dispositif de pointage classique PD, par exemple un écran tactile et un stylet.
- Des fonctions classiques de client de messagerie instantanée, IMCF.
- Une console CC permettant à un utilisateur de définir des règles et des fonctions, sous la forme de modules logiciels exécutables (Code compilé ou interprétable).
- Des fonctions supplémentaires de client de messagerie instantanée, SF, permettant à un utilisateur d'envoyer des commandes au serveur, pour utiliser une fonction associée à un message affiché sur son écran, par exemple en faisant un clic, un double clic, ou une sélection, au moyen d'un dispositif de pointage. Les fonctions supplémentaires SF comportent en outre des moyens logiciels pour télécharger des modules logiciels exécutables, à partir du serveur de messagerie instantanée IMSV', ou selon un autre mode de réalisation, des moyens pour extraire des modules logiciels exécutables insérés respectivement dans des messages reçus.

Les moyens logiciels constituant les fonctions classiques IMCF et les fonctions supplémentaires SF peuvent être téléchargées par tout moyen classique, par exemple avec un navigateur et le protocole HTTP, à partir d'un site web.

Exemple de règle : Si le serveur IMSV' reçoit un message de demande de connexion à un canal donné, provenant d'un individu qui n'est pas membre du groupe d'utilisateurs enregistrés pour ce canal, alors le serveur doit envoyer à ce groupe un message de demande de vote.

L'opérateur peut définir en outre la règle suivante : Si plus de 50% des membres du groupe votent OUI, alors le serveur doit enregistrer cet utilisateur comme membre de ce groupe.

L'opérateur peut définir en outre un module logiciel exécutable dans le serveur IMSV', et l'enregistrer dans le dépôt de règles PR, ce module permettant de mettre en oeuvre ces règles dans le serveur IMSV' quand cette fonction de vote est associée à un message invitant à voter. De même, L'opérateur peut définir un module logiciel exécutable dans les clients, et l'enregistrer dans le dépôt de règles PR, ce module permettant de mettre en oeuvre ces règles dans les clients quand cette fonction de vote est associée à un message invitant à voter.

Le gestionnaire de règles PM gère ces règles et les commandes envoyées par un client. Par exemple, si un individu demande à devenir membre d'un groupe, le gestionnaire de règles RM déclenche l'envoi d'un message invitant à voter, puis il rassemble les votes reçus dans les messages de réponse envoyés par les membres du groupe. Enfin il conclue, diffuse le résultat du vote, et inscrit le nouveau membre, s'il y a lieu. Dans le cas contraire, il envoie un message de refus au demandeur.

Le procédé selon l'invention permet d'associer toute fonction à tout message envoyé au client. Cependant, il est souhaitable que l'utilisateur puisse distinguer différents types de message et que les fonctions soient associées de manières prédéterminées aux différents types de message, pour que l'utilisateur sache quelle(s) fonction(s) est (sont) disponible(s) quand il lit un message sur son écran.

Dans certains cas, le type de message peut être déduit de son contenu. Par exemple le contenu de message « Voulez-vous bannir l'utilisateur X ? » indique clairement que ce message est associé à une fonction de vote, et qu'il suffit de cliquer une fois sur la surface de ce message pour faire apparaître une nouvelle fenêtre qui permet de voter. Dans d'autres exemples, si le contenu du message n'est pas assez explicite pour suggérer à l'utilisateur de cliquer sur le message, le créateur du message choisit une couleur d'affichage particulière, ou bien il insère une icône particulière, en tête de message, pour indiquer à l'utilisateur qu'il peut utiliser une fonction associée au message.

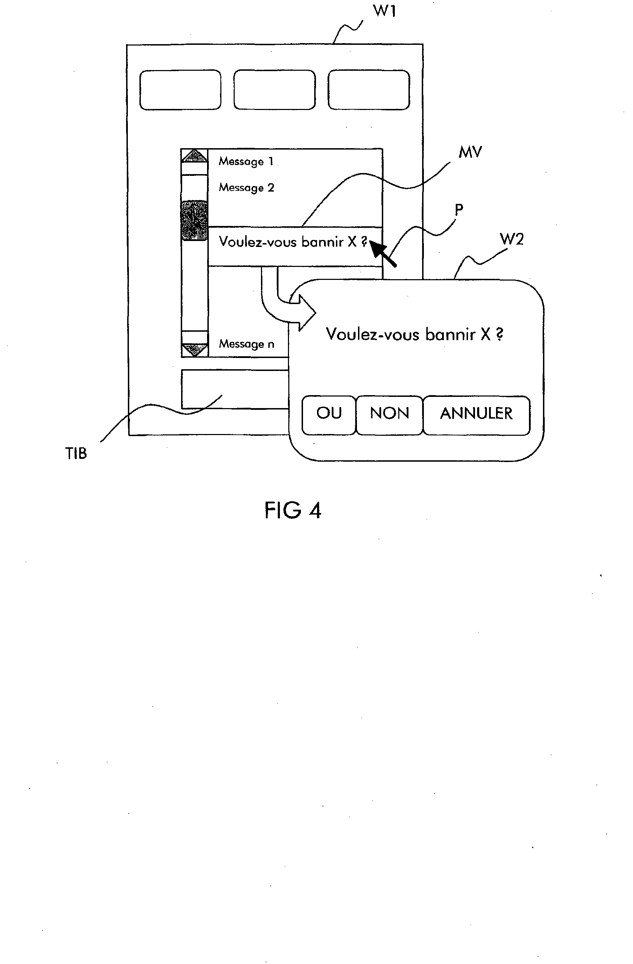

La **figure 4** illustre un exemple de mise en oeuvre du procédé selon l'invention pour un message associé à une fonction de vote. Elle représente la fenêtre principale W1 d'une messagerie instantanée, qui affiche notamment un message MV « Voulez-vous bannir X ? ». Ce message propose explicitement de voter pour exclure l'utilisateur X du groupe d'utilisateurs du canal considéré. Quand un utilisateur lit ce message MV, il comprend qu'une fonction de vote est associée à ce message. Il en déduit facilement qu'il peut faire apparaître des commandes spécifiques à la fonction de vote en cliquant sur la surface d'affichage de ce message MV.

Il clique donc sur le message MV, avec le dispositif de pointage qui permet de déplacer un pointeur P, par exemple un stylet. Cela fait apparaître une autre fenêtre W2 qui affiche la même question, et trois boutons de commande spécifiques à la fonction de vote : OUI, NON, Annuler. L'utilisateur clique sur un de ces boutons pour voter ou s'abstenir. La fenêtre W2 se referme ensuite.

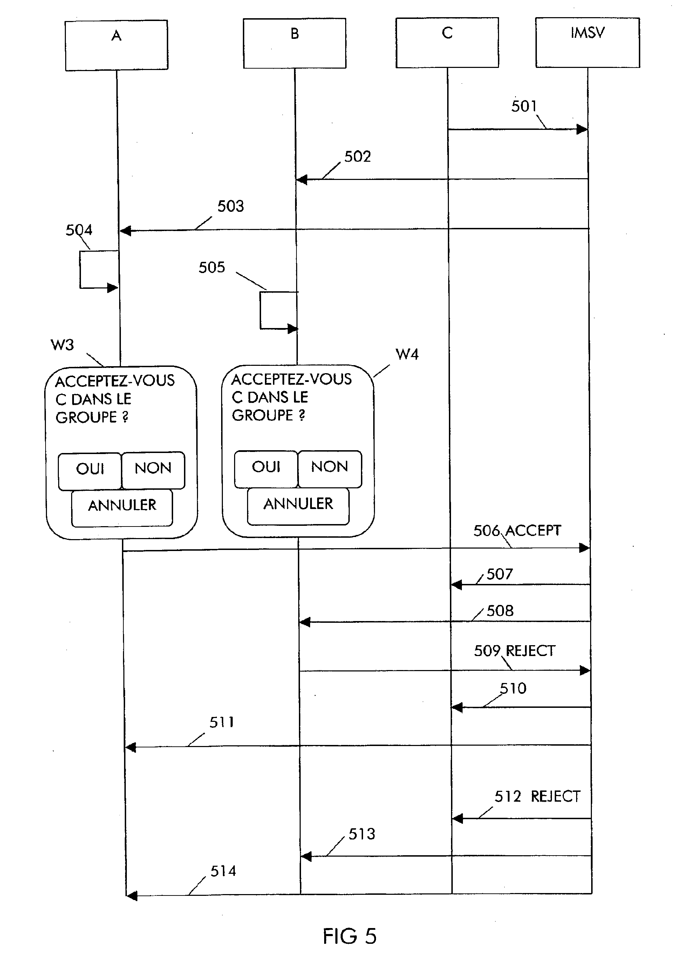

La **figure 5** représente les échanges de message entre trois clients A, B, C et un serveur de messagerie instantanée IMSV pendant les votes des deux utilisateurs A et B pour décider si un troisième utilisateur C est autorisé à faire partie du groupe déjà constitué de A et B :
- Etape 501 : Le client de l'utilisateur C envoie un message au serveur IMSV pour demander à entrer dans le groupe déjà constitué par les utilisateurs A et B. Ce message contient une adresse indiquant l'origine C de cette demande, un indicateur de type de message (Demande pour entrer dans un groupe), et un identificateur de canal.
- Etape 502 : Le serveur IMSV envoie un message au client de l'utilisateur B pour lui demander « Acceptez-vous C dans le groupe ? ».
- Etape 503 : Le serveur IMSV envoie un message au client de l'utilisateur A pour Lui demander « Acceptez-vous C dans le groupe ? ».
- Etape 504 : L'utilisateur A clique sur le message qui s'est affiché sur son terminal, pour faire apparaître une nouvelle fenêtre W3 qui répète la question, et qui comporte des boutons de commande OUI, NON, ANNULER.
- Etape 505 : L'utilisateur B clique sur le message qui s'est affiché sur son terminal, pour faire apparaître une nouvelle fenêtre W4 qui répète la question, et qui comporte des boutons de commande OUI, NON, ANNULER.
- Etape 506 : L'utilisateur A clique sur le bouton OUI. Le client de l'utilisateur A envoie un message au serveur IMSV pour accepter que l'utilisateur C entre dans le groupe déjà constitué par les utilisateurs A et B. Ce message contient une adresse indiquant l'origine A de cette demande, un indicateur de type de message (Acceptation d'une demande pour entrer dans un groupe), et un identificateur de canal.
- Etape 507 : Le serveur IMSV envoie un message d'information au client de l'utilisateur C pour l'informer de l'acceptation par A.
- Etape 508 : Le serveur IMSV envoie un message d'information au client de l'utilisateur B pour l'informer de l'acceptation par A.
- Etape 509 : L'utilisateur B clique sur le bouton NON. Le client de l'utilisateur B envoie un message au serveur IMSV pour refuser que l'utilisateur C entre dans le groupe déjà constitué par les utilisateurs A et B. Ce message contient une adresse indiquant l'origine B de cette demande, un indicateur de type de message (Rejet d'une demande pour entrer dans un groupe), et un identificateur de canal.
- Etape 510 : Le serveur IMSV envoie un message d'information au client de l'utilisateur C pour l'informer du rejet par B.
- Etape 511 : Le serveur IMSV envoie un message d'information au client de l'utilisateur A pour l'informer du rejet par B.
- Etape 512 : Le serveur IMSV détermine le résultat du vote, c'est à dire un rejet, compte tenu des règles de décision dans cet exemple. Il envoie ensuite un message de rejet au client de l'utilisateur C pour l'informer du résultat du vote. Ce message de rejet contient une adresse indiquant l'origine IMSV de ce message, un indicateur de type de message (Rejet d'une demande pour entrer dans un groupe), et un identificateur de canal.
- Etape 513 : Le serveur IMSV envoie un message de rejet au client de l'utilisateur B pour l'informer du résultat du vote.
- Etape 514 : Le serveur IMSV envoie un message de rejet au client de l'utilisateur A pour l'informer du résultat du vote.

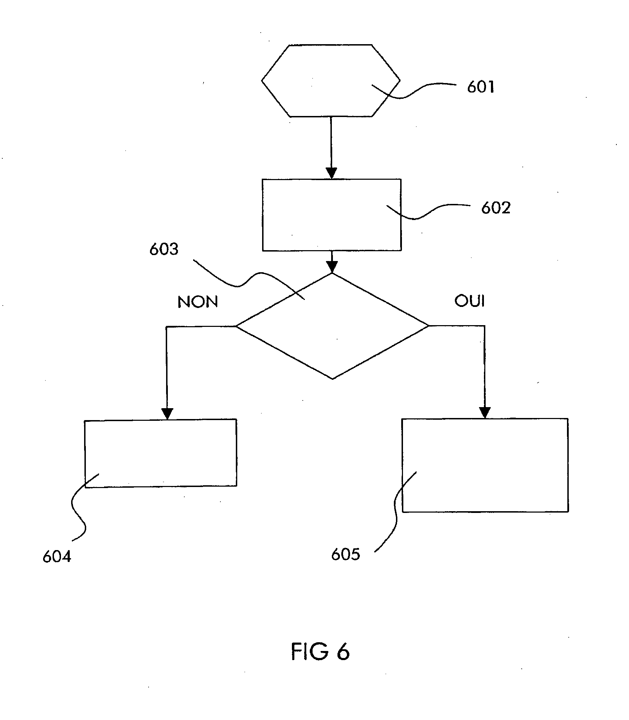

La **figure 6** représente plus en détails les étapes du traitement d'un message reçu par un serveur de messagerie instantanée, dans un exemple de mise en oeuvre du procédé selon l'invention :
- Etape 601 : Le serveur reçoit un message qu'il doit transmettre à au moins un client.
- Etape 602 : Il extrait de ce message un indicateur de type de message (Par exemple : Demande pour entrer dans un groupe).
- Etape 603 : Il en déduit si une fonction est associée ou non à ce message.
- Etape 604 : Si aucune fonction n'est associée au message, il copie le message et l'envoie au(x) destinataire(s), dans cet exemple c'est les clients du groupe considéré.
- Etape 605 : Si une fonction est associée au message, le serveur exécute un module logiciel correspondant au type du message reçu. Dans cet exemple, le type « Demande pour entrer dans un groupe » est associé à la fonction « Vote par tous les utilisateurs appartenant au groupe concerné », ce qui implique que le serveur soit prêt à recevoir des messages de vote, et à prendre une décision en fonction des votes. Le serveur exécute un module logiciel apte à recevoir des messages de vote, et à prendre une décision en fonction des votes. Le module logiciel exécuté tient compte du contexte : adresse du serveur d'origine du message, contenu du message, canal concerné, et état actuel du serveur.

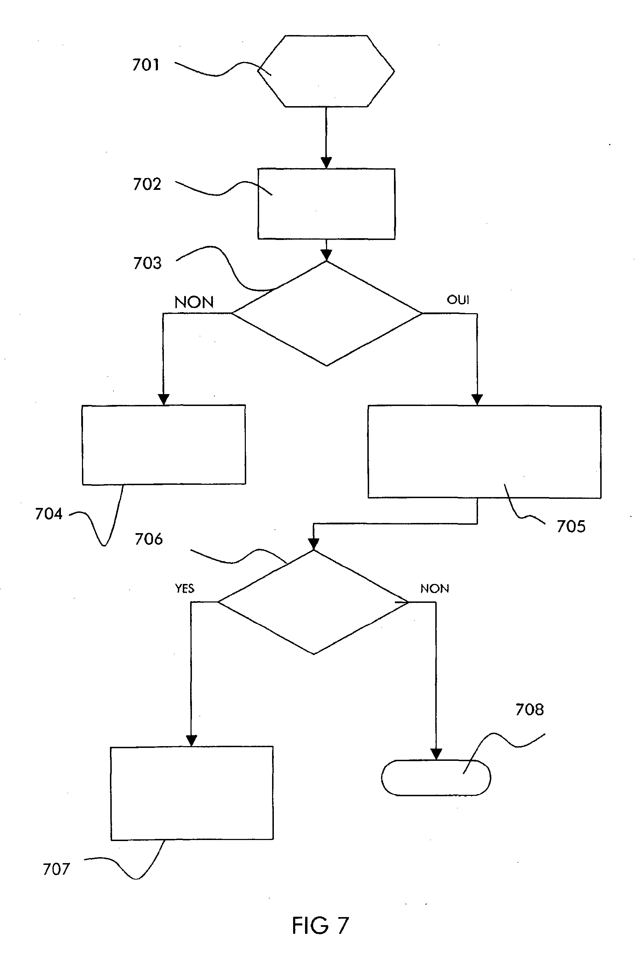

La **figure 7** représente plus en détails les étapes du traitement d'un message reçu par un client de messagerie instantanée, dans un exemple de mise en oeuvre du procédé selon l'invention :
- Etape 701 : Le client reçoit un message.
- Etape 702 : Il extrait de ce message un indicateur de type de message (Par exempte : Demande pour entrer dans un groupe).
- Etape 703 : Il en déduit si une fonction est associée ou non à ce message.
- Etape 704 : Si aucune fonction n'est associée au message, il affiche le message sur l'écran du terminal de manière classique, avec un style normal.
- Etape 705 : Si une fonction est associée au message, le client exécute un module logiciel correspondant au type du message reçu. La fonction associée peut concerner deux types d'action :
   -- Une action lancée indépendamment de l'utilisateur, par exemple initialiser des états internes d'un module logiciel dans le client.
   -- Une action lancée par l'utilisateur.
      Premier exemple : On peut associer à un message d'invitation à joindre un canal de discussion une fonction pour créer un onglet où seront visualisés les messages de ce canal, et pour permettre à un utilisateur d'ouvrir une fenêtre de dialogue permettant d'accepter l'invitation. Cet onglet ne visualise d'abord que le message d'invitation car le serveur n'envoie pas les messages émis sur ce canal tant que l'invitation n'a pas été acceptée. Pour faire ouvrir la fenêtre de dialogue, l'utilisateur clique sur le message. La fenêtre de dialogue comporte des boutons OUI, NON, ANNULER. L'utilisateur clique sur OUI pour accepter l'invitation.
      Second exempte : Un message du type « Demande pour entrer dans un groupe » est associé à la fonction « Vote par tous les utilisateurs appartenant au groupe concerné » qui va permettre à un utilisateur d'ouvrir une fenêtre de dialogue permettant de voter. Pour faire ouvrir cette fenêtre de vote, l'utilisateur clique sur le message. La fenêtre de vote comporte des boutons OUI, NON, ANNULER. L'utilisateur clique sur OUI pour accepter le demandeur dans le groupe.
      Dans ces deux exemples, il est nécessaire que le client soit prêt à détecter un clic sur le message afin d'afficher une nouvelle fenêtre permettant de voter, puis détecter la commande constituant le vote, puis envoyer un message de vote au serveur. Le module logiciel tient compte du type de message, de l'adresse du serveur d'origine, du canal concerné, et du contenu du message reçu.
- Etape 706 : Le client détermine si le message reçu est d'un type qui nécessite un affichage, ou pas. En effet, certains messages associés à une fonction ne nécessitent pas d'affichage, car ils sont seulement destinés à lancer une action automatique qui peut rester ignorée de l'utilisateur. Pour d'autres types de message, il est nécessaire d'afficher le message pour que l'utilisateur fasse une action (Par exemple voter).
- Etape 707 : Si le message reçu est d'un type qui nécessite un affichage, le client affiche le message sur l'écran du terminal, éventuellement avec un style spécifique à la fonction associée au message, par exemple avec une couleur particulière permettant à un utilisateur de voir au premier coup d'oeit qu'une fonction est associée à ce message, pour l'inciter à cliquer sur ce message, et ainsi faire apparaître une nouvelle fenêtre comportant des commandes spécifiques.
- Etape 708 : Si le message reçu n'est pas d'un type qui nécessite un affichage, le client n'affiche pas le message sur l'écran du terminal.

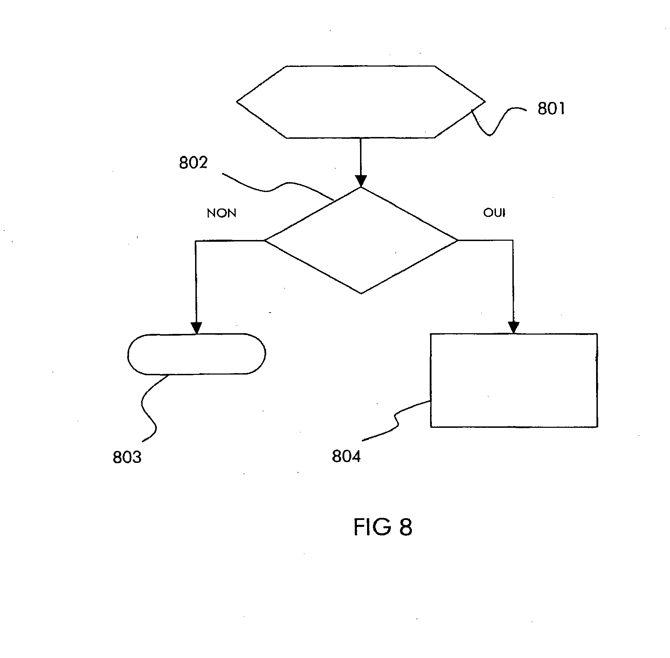

La **figure 8** représente plus en détails les étapes du traitement d'une action de l'utilisateur sur un message affiché par un client de messagerie instantanée, dans un exemple de mise en oeuvre du procédé selon l'invention :
- Etape 801 : Le client détecte une action de l'utilisateur : L'utilisateur a cliqué, une ou deux fois, sur la surface où est affiché un message.
- Etape 802 : le client détermine le type de ce message.
- Etape 803 : Si ce n'est pas un message d'un type ayant une fonction associée, le client ne fait rien, il reste en attente.
- Etape 804 : Si c'est un message d'un type ayant une fonction associée, le client exécute un module logiciel correspondant au type du message (C'est l'étape 705 décrite précédemment).

Il y a deux variantes du procédé selon l'invention, qui diffèrent selon la façon de fournir au client un module de logiciel exécutable correspondant à une fonction associée à un message reçu par ce client :
- 1) Soit un module de logiciel est systématiquement intégré à chaque message auquel est associée une fonction. Cette variante n'est applicable que si les modules logiciels correspondant à ces fonctions ont tous un volume suffisamment petit pour pouvoir être intégré aux messages ; et si ces modules logiciels sont exécutables sur toute plateforme logicielle (Par exemple ces modules sont des appliquettes en langage Java ou Lua). Un message associé à une fonction comporte alors un en-tête indiquant le type du message, une section textuelle (si le message doit être affiché), et une section contenant le module logiciel correspondant à la fonction associée au message.
- 2) Soit un module de logiciel est téléchargé à partir du serveur, sur requête du client, cette requête n'étant nécessaire que la première fois où ce client rencontre un type de message donné.

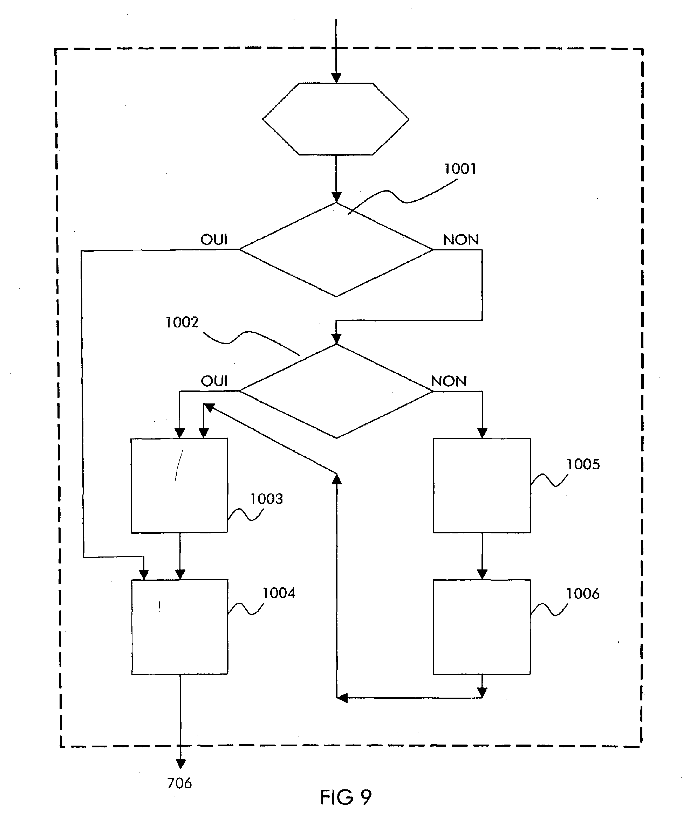

La **figure 9** représente plus en détails l'étape 705 du traitement d'un message reçu par un client de messagerie instantanée, dans un exemple de mise en oeuvre du procédé selon l'invention, dans le cadre de la seconde variante. Cette étape 705 est elle-même composée des étapes suivantes :
- Etape 1001 : Le client détermine si le module logiciel correspondant au type du message est déjà chargé dans la mémoire de travail (Mémoire volatile) utilisée par ce client, dans le terminal considéré, car ce type de message a pu être déjà rencontré précédemment.
- Etape 1002 : Si le module logiciel correspondant au type du message n'est pas déjà chargé dans la mémoire de travail utilisé par ce client, le client détermine si le module logiciel correspondant au type du message est stocké dans une mémoire de stockage de programmes (Mémoire non volatile), dans le terminal considéré.
- Etape 1003 : Si le module logiciel correspondant au type du message est stocké dans cette mémoire de stockage de programmes, parce que ce type de message a déjà été rencontré par ce client, le client charge ce module dans la mémoire de travail.
- Etape 1004 : Puis le client lance l'exécution de ce module, en prenant en compte le contenu du message reçu, et le contexte de ce message. Il passe ensuite à l'étape 706 décrite précédemment.
- Etape 1005 : Si le module logiciel correspondant au type du message n'est pas stocké dans la mémoire de stockage de programmes, parce que ce type de message n'a jamais été rencontré par ce client, le client envoie un message de requête au serveur pour télécharger un module logiciel correspondant au type du message reçu. Il utilise le protocole HTTP par exemple.
- Etape 1006 : Puis le client reçoit module logiciel demandé. Il l'enregistre dans la mémoire de stockage de programmes, à une adresse permettant de le retrouver à partir du type de message considéré, et d'autre part il charge ce module dans la mémoire de travail (Branchement à l'étape 1003).

Selon un autre mode de réalisation, tous les modules logiciels stockés dans la mémoire de stockage de programmes sont chargés dans la mémoire de travail au moment du démarrage du client. Les étapes 1002, 1003, 1005, 1006 sont alors supprimées car le procédé passe directement à l'étape 1004.

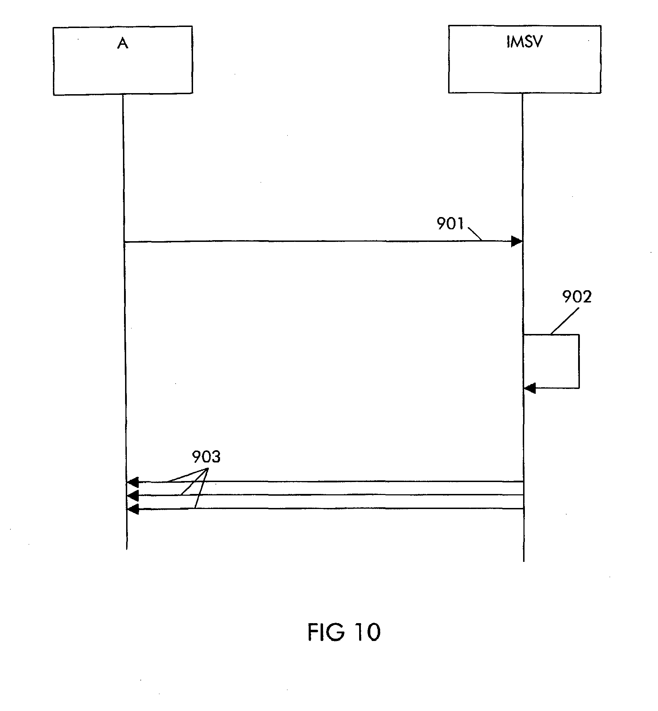

La **figure 10** représente un exemple d'échange de messages entre un client A et un serveur de messagerie instantanée IMSV, pour télécharger un module logiciel correspondant à un type de message donné :
- Etape 901 : Le client A envoie un message de requête au serveur IMSV pour télécharger un module logiciel correspondant au type du message reçu. Il utilise le protocole HTTP par exemple. Cette requête précise :
   -- le type de message considéré,
   -- un numéro de version de ce type de message,
   -- les capacités du terminal, c'est à dire :
      --- le format du fichier binaire exécutable qui est attendu (Par exemple .class, .dll, .lua, etc),
      --- et éventuellement des spécificités supplémentaires permettant de discriminer différents fichiers binaires exécutables ayant le même format, et correspondant à un même type de message.
- Etape 902 : Le serveur IMSV sélectionne ensuite le fichier binaire exécutable correspondant aux paramètres indiqués dans la requête.
- Etape 903 : Enfin, le serveur IMSV envoie le fichier binaire exécutable sélectionné, en un ou plusieurs paquets, à destination du client A.

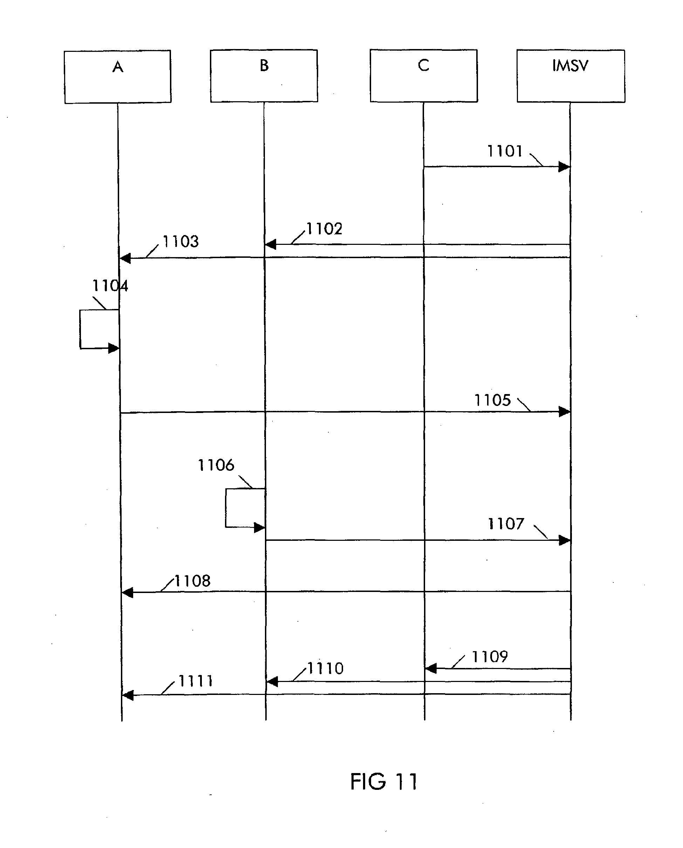

   La **figure 11** représente les échanges de messages entre des clients A, B, C et un serveur de messagerie instantanée IMSV, pendant l'utilisation d'un autre exemple de fonction associée à un message. Cet exemple de fonction associée à un message permet à des membres d'un même groupe de discussion, sur un canal donné, de participer à un jeu, en envoyant une réponse choisie dans une liste de réponses possibles. Le gagnant sera l'utilisateur qui aura répondu le plus vite.
- Etape 1101 : L'utilisateur du client C envoie au serveur IMSV un premier message qui démarre le jeu en demandant à tous les autres membres du groupe de répondre le plus vite possible à une question, en cliquant la bonne réponse dans une liste de réponses possibles. Ce message contient une adresse identifiant le client C, le type de message (Le nom du jeu), et le canal correspondant au groupe d'utilisateurs considéré.
- Etapes 1102, 1103 : Le serveur IMSV diffuse le message contenant la question en recopiant le premier message et en l'adressant aux clients, A et B, des autres utilisateurs appartenant au groupe.
- Etape 1104 : L'utilisateur du client A clique la bonne réponse dans le message qu'il a reçu.
- Etape 1105 : Dans le client A, le module logiciel correspondant à la fonction associée (C'est à dire le jeu) reconnaît que la réponse cliquée est la bonne, et il envoie alors un message de réponse au serveur IMSV. Ce message contient une adresse identifiant le client A, le type de message (Le nom du jeu), et le canal correspondant au groupe d'utilisateurs considéré.
- Etapes 1106: Entretemps l'utilisateur du client B a réfléchi. Il clique maintenant la bonne réponse dans le premier message qu'il a reçu.
- Etape 1107 : Dans le client B, le module logiciel correspondant à la fonction associée reconnaît que la réponse cliquée est la bonne, et il envoie alors un message de réponse au serveur IMSV. Ce message contient une adresse identifiant le client B, le type de message (Le nom du jeu), et le canal correspondant au groupe d'utilisateurs considéré.
- Etapes 1109, 1110, 1111 : Le serveur IMSV constate que le message de bonne réponse envoyée par le client A a été reçu avant le message de bonne réponse envoyé par le client B, et il désigne donc A comme étant le gagnant. Il diffuse un nouveau message vers chacun des utilisateurs, ce message contenant un texte indiquant que A est le gagnant.

## Revendications

1. Procédé pour commander au moins une fonction d'un client de messagerie instantanée, comportant les étapes consistant à :
- envoyer, d'un serveur vers ce client, un message contenant un indicateur de type de message,
- recevoir (701) ce message dans le client et afficher ce message sur un écran,
- extraire (702) du message reçu un indicateur de type de message,
- associer une fonction à un message qui est affiché sur un écran, par ce client, en associant (705) à ce message un premier module logiciel correspondant au type du message,
- et tancer l'exécution (705) de ce module logiciel, dans le client, par une action d'un dispositif de pointage lorsque le pointeur de ce dispositif est placé sur la zone d'affichage de ce message sur ledit écran ;
**caractérisé en ce qu'**il comporte en outre les étapes consistant, dans ledit serveur, à :
- extraire (602) du message à envoyer un indicateur de type de message,
- associer à ce message un second module logiciel correspondant au type du message,
- et exécuter (605) ce second module logiciel dans le serveur.

2. Procédé selon la revendication 1, **caractérisé en ce que** pour associer (705) à un message reçu par le client un premier module logiciel correspondant au type du message, il consiste à :
- détecter (702) qu'un message reçu par ledit client de messagerie instantanée est d'un type particulier,
- et télécharger alors (705), d'un serveur de messagerie instantanée (IMSV) vers ce client, un module logiciel exécutable correspondant à ce type particulier et réalisant ladite fonction.

3. Procédé selon la revendication 1, **caractérisé en ce que** pour associer (705) à un message reçu par le client un premier module logiciel correspondant au type du message, il consiste à intégrer à ce message, avant de le transmettre du serveur de messagerie instantanée (IMSV) au client, un module logiciel exécutable permettant de réaliser ladite fonction.

4. Procédé selon la revendication 1, **caractérisé en ce que** pour tancer l'exécution (705) de ce module logiciel par une action (801) d'un dispositif de pointage lorsque son pointeur est placé sur la zone d'affichage de ce message sur ledit écran, il consiste à faire une action choisie parmi :
- un clic,
- un double clic,
- une sélection.

5. Serveur de messagerie instantanée (IMSV'), comportant des moyens pour envoyer, vers un client, un message contenant un indicateur de type de message, cet indicateur étant susceptible d'indiquer qu'une fonction est associée à ce message ;
**caractérisé en ce qu'**il comporte en outre :
- des moyens (PR) pour stocker des modules logiciels exécutables mettant en oeuvre des fonctions qui peuvent être associées à des messages envoyés par ce serveur ;
- des moyens pour extraire (PM), d'un message à envoyer, un indicateur de type de message,
- et des moyens (PM) pour exécuter, dans ce serveur, un module logiciel correspondant au type du message à envoyer, si une fonction est associée à ce message.

6. Serveur de messagerie instantanée (IMSV') selon ta revendication 5, **caractérisé en ce qu'**il comporte en outre des moyens (PR) pour stocker et fournir à un terminal un module logiciel, à la demande d'un client de messagerie instantanée exécuté sur ce terminal.

7. Serveur de messagerie instantanée (IMSV') selon la revendication 5, **caractérisé en ce qu'**il comporte en outre des moyens (PR) pour insérer un module logiciel dans un message à destination d'un client de messagerie.

## Patentansprüche

1. Verfahren zur Steuerung mindestens einer Funktion eines Clients zur sofortigen Nachrichtenübermittlung, die folgenden Schritte umfassend:
- Senden, von einem Server an den Client, einer Nachricht, welche einen Indikator für den Typ der Nachricht enthält,
- Empfangen (701) dieser Nachricht im Client, und Anzeigen dieser Nachricht auf einem Display,
- Extrahieren (702) eines Indikators für den Typ der Nachricht aus der empfangenen Nachricht,
- Zuordnen, durch diesen Client, einer Funktion zu einer Nachricht, die auf einem Display angezeigt wird, indem dieser Nachricht ein erstes Software-Modul zugeordnet (705) wird, welches dem Typ der Nachricht entspricht,
- und Starten der Ausführung (705) dieses Software-Moduls im Client durch eine Aktion einer Zeigevorrichtung, wenn der Zeiger dieses Vorrichtung auf den Anzeigebereich dieser Nachricht auf dem besagten Display gesetzt wird;
**dadurch gekennzeichnet, dass** es in dem besagten Server weiterhin die folgenden Schritte umfasst:
- Extrahieren (602) eines Indikators des Typs der Nachricht aus der zu sendenden Nachricht,
- Zuordnen eines zweiten Software-Moduls, welches dem Typ der Nachricht entspricht, zu dieser Nachricht,
- und Ausführen (605) dieses zweiten Software-Moduls in dem Server.

2. Verfahren nach Anspruch 1, **dadurch gekennzeichnet, dass** es für das Zuordnen (705), zu einer am Client empfangenen Nachricht, eines ersten Software-Moduls, welches dem Typ der Nachricht entspricht, in Folgendem besteht:
- Erkennen (702), dass eine an dem besagten Client zur sofortigen Nachrichtenübermittlung empfangene Nachricht von einem bestimmten Typ ist,
- und anschließendes Herunterladen (705), von einem Server zur sofortigen Nachrichtenübermittlung (IMSV) auf diesen Client, eines ausführbaren Software-Moduls, welches diesem bestimmten Typ entspricht und die besagte Funktion ausführt.

3. Verfahren nach Anspruch 1, **dadurch gekennzeichnet, dass** es für das Zuordnen (705), zu einer am Client empfangenen Nachricht, eines ersten Software-Moduls, welches dem Typ der Nachricht entspricht, darin besteht, vor der Übertragung der Nachricht von dem Server zur sofortigen Nachrichtenübermittlung (IMSV) an den Client ein ausführbares Software-Modul, welches das Ausführen der besagten Funktion ermöglicht, in diese Nachricht einzufügen.

4. Verfahren nach Anspruch 1, **dadurch gekennzeichnet, dass** es für den Start der Ausführung (705) dieses Software-Moduls durch eine Aktion (801) einer Zeigevorrichtung, wenn der Zeiger auf den Anzeigebereich dieser Nachricht auf dem besagten Display gesetzt wird, darin besteht, eine der aus der folgenden Gruppe ausgewählte Aktion durchzuführen:
- Ein Klick,
- ein Doppelklick,
- eine Auswahl.

5. Server zur sofortigen Nachrichtenübermittlung (IMSV'), umfassend Mittel zum Senden, an einen Client, einer Nachricht, welche einen Indikator des Typs der Nachricht enthält, wobei dieser Indikator geeignet ist, um anzuzeigen, dass dieser Nachricht eine Funktion zugeordnet ist;
**dadurch gekennzeichnet, dass** er weiterhin umfasst:
- Mittel (PR) zum Speichern von ausführbaren Software-Modulen, welche Funktionen, die den durch diesen Server gesendeten Nachrichten zugeordnet werden können, durchführen;
- Mittel (PM) zum Extrahieren eines Indikators des Typs der Nachricht aus einer zu sendenden Nachricht,
- und Mittel (PM) zum Ausführen, in diesem Server, eines Software-Moduls, welches dem Typ der zu sendenden Nachricht entspricht, wenn dieser Nachricht eine Funktion zugeordnet ist.

6. Server zur sofortigen Nachrichtenübermittlung (IMSV') nach Anspruch 5, **dadurch gekennzeichnet, dass** er weiterhin Mittel (PR) zum Speichern eines Software-Moduls und zum Bereitstellen dieses Software-Moduls an ein Endgerät auf Anfrage eines auf diesem Endgerät ausgeführten Clients zur sofortigen Nachrichtenübermittlung umfasst.

7. Server zur sofortigen Nachrichtenübermittlung (IMSV') nach Anspruch 5, **dadurch gekennzeichnet, dass** er weiterhin Mittel (PR) zum Einfügen eines Software-Moduls in eine für einen Nachrichtenübermittlungs-Client bestimmte Nachricht umfasst.

## Claims

1. A method for commanding at least one function of an instant messaging client that consists of:
- sending, from a server to that client, a message containing a message type indicator,
- receiving (701) that message in the client and displaying that message on a screen,
- extracting (702) from the received message a message type indicator,
- associating a function with a message displayed on a screen, by that client, associating (705) that message with a first software module corresponding to the message type,
- and launching the execution of (705) that software module, in the client, by an action of a pointing device when the cursor of that device is placed on the display area of that message on said screen;
**characterized in that** it further comprises the steps consisting, within said server, of:
- extracting (602) from the message to be sent a message type indicator,
- associating that message with a second software module corresponding to the message type,
- and executing (605) that second software module in the server.

2. A method according to claim 1, **characterized in that** in order to associate (705) a message received by the client with a first software module corresponding to the message type, it consists of:
- detecting (702) that a message received by said instant messaging client is of a particular type,
- and then downloading (705), from an instant messaging server (IMSV) to that client, an executable software module corresponding to that particular type and performing said function.

3. A method according to claim 1, **characterized in that** in order to associate (705) a message received by the client with a first software module corresponding to the message type, it consists of integrating that message, before transmitting it from the instant messaging server (IMSV) to the client, an executable software module making it possible to perform said function.

4. A method according to claim 1, **characterized in that** in order to launch the execution (705) of that software module by an action of a pointing device when the cursor of same is placed on the display area of that message on said screen, it consists of performing one action chosen from among:
- clicking,
- double-clicking,
- highlighting.

5. An instant messaging server (IMSV'), comprising means for sending, to a client, a message containing a message type indicator, that indicator being able to indicate that a function is associated with that message;
**characterized in that** it further comprises:
- means (PR) for storing executable software modules implementing functions that can be associated with messages sent by that server;
- means for extracting (PM), from a message to be sent, a message type indicator,
- and means (PM) for executing, within that server, a software module corresponding to the message type to be sent, if a function is associated with that message.

6. An instant messaging server (IMSV') according to claim 5, **characterized in that** it further comprises means (PR) for storing a software module and for providing same to a terminal, upon the demand of an instant messaging client being run on that terminal.

7. An instant messaging server (IMSV') according to claim 5, **characterized in that** it further comprises means (PR) for inserting a software module into a message intended for a messaging client.
